# EUROPEAN PATENT APPLICATION

(11) **EP 2 916 280 A1**
(43) Date of publication of application: **09.09.2015**
(21) Application number: 15157483.7
(22) Date of filing: 03.03.2015
(51) Int. Cl.: G06Q 20/12, G06Q 20/32, G06Q 20/40, G06Q 30/06

(54) **Devices, systems and methods for message delivery**

(30) Priority: 03.03.2014 GB 201403720; 10.07.2014 WO PCT/GB2014/052119; 21.07.2014 GB 201412928
(71) Applicant: Powa Technologies Limited, London EC2N 4AY (GB)
(72) Inventor: Wagner, Dan, London, EC2N 4AY (GB); Ingram, David, London, EC2N 4AY (GB); Johns, Mike, London, EC2N 4AY (GB); Williamson, Ian Thomas, London, EC2N 4AY (GB)
(74) Representative: Carpmaels & Ransford LLP

(57) **Abstract**

A method is provided on a server for controlling messages transmitted to an electronic device. Message preference data is retrieved from a first database. It is then determined if a message is authorised for transmission to the electronic device according to the message preference data, and if the message is determined to be authorised, the message is transmitted from the server to the electronic device. Corresponding devices, systems and computer readable media are also disclosed.

## Description

### Field of the Disclosure

This disclosure relates to devices, systems and methods for controlling messages, for example messages which are transmitted to or notified on an electronic device, such as a mobile phone or tablet computer.

### Background

Electronic devices, such as PCs, cellular phones and tablet devices are subject to an increasing number and frequency of external messages provided by third parties, such as, text messages, push messages, website promotions, in-app promotions, including advertising, promotion messages, beacon promotions and more.

The volume of these messages and frequency with they are received at the mobile devices wastefully utilizes device and network resources, such as bandwidth, storage and processing capacity. Moreover, excessive messages can be a nuisance to the users of these devices. The users of such electronic devices may then progressively or wholly disable, uninstall, or simply ignore the messages and applications or services that provide them. When this happens, neither the user nor those who wish to send these messages to the user benefit.

There is, therefore, a need to solve the problem of the high and unmanageable volume of messaging, the high incidence of irrelevant messaging, and the waste of resources in providing wasteful messaging.

### Summary of the Disclosure

### Message Transfer

A method on a server for controlling messages transmitted to an electronic device is disclosed, the method comprising steps of retrieving message preference data from a first database, determining by the server if a message is authorised for transmission to the electronic device according to the message preference data, and if the message is determined to be authorised, transmitting the message from the server to the electronic device.

The message may be transmitted to the electronic device for notification on the electronic device.

A method on an electronic device for controlling the notification of messages on the electronic device is disclosed, the method comprising steps of retrieving message preference data from a first database, determining by the electronic device if a message is authorised for notification on the electronic device according to the message preference data, and if the message is determined to be authorised, providing notification of the message on the electronic device.

An electronic device comprising processing circuitry for controlling messages transmitted to a secondary electronic device is disclosed, wherein the processing circuitry is configured to retrieve message preference data from a first database, determine if a message is authorised for transmission to the secondary electronic device according to the message preference data, and if the message is determined to be authorised, transmitting the message from the electronic device. The electronic device may be a server in communication with the secondary electronic device and first database.

An electronic device comprising processing circuitry is disclosed, wherein the processing circuitry is configured to retrieve message preference data from a first database, determine if a message is authorised for notification on the electronic device according to the message preference data, and if the message is determined to be authorised, providing notification of the message on the electronic device.

The aforementioned methods and devices ensure that users and their devices can accordingly avoid receiving wasteful messages which impacts network and device resources, such as bandwidth, storage and processing resources. In addition, users are presented with or alerted to only relevant messaging. In this way, the consumer obtains added benefit from the messaging which is received, and those devices performing the messaging avoid wastage of their resources.

Notification of the message on the electronic device may comprise notification of the message presence on the electronic device or server, and may comprise one or more of: displaying an alert of the message presence on the device, generating a tactile alert of the message presence at the electronic device, generating an audible alert at the electronic device, displaying the message or part thereof on a display of the electronic device.

Each database mentioned herein may be implemented in conjunction and/or within one or more of the aforementioned electronic devices or server, or in a standalone device, such as a standalone server, which is in communication with the electronic device and/or server. Each database may be distributed across multiple electronic devices and/or servers.

The methods may further comprise, prior to the step of retrieving message preference data, the steps of determining that a wireless beacon is in communication with the electronic device, and storing beacon information of the wireless beacon in a second database. This determination can be used as a consideration when deciding what message will be transmitted, if a message is transmitted.

The methods may further comprise, prior to the step of retrieving message preference data, the steps of determining that the electronic device has entered a defined geographic location or area, and storing information related to the geographic location or area in a second database. This determination can be used as a consideration when deciding what message will be transmitted, if a message is transmitted.

The message itself may comprise one or more of: a push message, an email message, a SMS message, an in-app pop-up message, or a website pop-up message should be transmitted to the electronic device, and storing information related to the one or more of a push message, text message, such as an SMS message, an in-app pop-up message, or a website pop-up message in a second database. These messages correspond to different types of message.

The methods may further comprise, prior to the step of retrieving message preference data, the steps of: determining that the message should be transmitted to the electronic device; and storing information related to the message in a second database. This enables flexibility in choosing the type of message that is sent to a user of the electronic device. Each message type may be indicative of a respective priority associated with the underlying message.

The first database and second database of the methods may be a single combined database to help reduces signaling and networking requirements. Alternatively, the first database and second database may be different databases to permit independent autonomous operation which allows each database to be optimized for its respective function.

The methods may comprise, after the step of storing beacon information and prior to the step of retrieving message preference data, the steps of modifying the message preference data in the first database based on the beacon information in the second database. The beacon information thus can be used to dynamically and instantaneously update the preference data.

The message preference data of the method may comprise a maximum frequency by which messages can be transmitted to the electronic device. This results in efficient use of bandwidth.

The beacon information for each wireless beacon of the methods may comprise one or more of: identification information of the beacon; a time at which the wireless beacon was detected by the electronic device, a geographical location or area at which the wireless beacon was detected; a time at which a last message was transmitted to the electronic device in response to detection of the wireless beacon; and a content type associated with the wireless beacon. This beacon information permits each beacon to be uniquely identified by a number of aspects, all of which can be used to update the preference data or the message that is sent, if one is sent.

The step of the method of determining if a message is authorised may comprise determining if a particular wireless beacon has been previously detected within a predetermined period of time. This can be used to limit the number of message a user would otherwise have received when a plurality of beacons have been detected.

The step of determining if a message is authorised of the method may comprise comparing the message preference data to characteristics of the message. This ensures that only authorized messages are sent.

The message preference data of the method may comprise a time of day, month, or year at which messages can be notified on the electronic device. This provides a further degree of control over the sending of messages.

The message preference data of the method may comprise one or more of: the amount of money a user spends on goods or services within a given time period, such as per week, month, or year; the amount of money the user spends on particularly categories of goods or services within a given time period, such as per week, month, or year; the locations at which the user purchases or commonly purchases goods or services; whether a user has purchased goods or services in a particular category within a given time period, such as the previous day, week, month, or year; a prediction as to whether the user is interested in a particular category of goods or services. This provides further information from which it can be determined whether a message should be sent.

The methods may comprise updating the message preference data according to feedback received from the electronic device, wherein the feedback received from the electronic device is caused by one or more of opening the message, following a link embedded in the message, ignoring the initial message alert, dismissing an initial message alert, snoozing an initial message alert for later review, saving an initial message alert for later review, opening an initial message alert, dismissing the message, snoozing the message for later review, saving the message for later review, reading the message, clicking a link within the message, activating a button within the message, ignoring the message, and taking any other action related to the message. The nature of the feedback can thus be used to determine whether a message should be sent.

The beacon of the method may be configured to communicate with the electronic device via a short-range wireless communications protocol, such as Bluetooth or Bluetooth Low Energy, or Bluetooth Smart.

The electronic device of method may be configured to communicate with the server via a long-range wireless protocol, such as one or more of: LTE, UMTS, 3G, EDGE, GPRS, GSM, and Wi-Fi.

The message feedback data of the method may comprise a behavioural flag, such as one or more of a like flag, a dislike flag, a type flag, a 'not now' flag. A flag permits authorization to be more easily determined. The message feedback data of the method may comprises data of one or more actions taken in response to a message, said actions comprising one or more of: opening the message, following a link embedded in the message, ignoring the initial message alert, dismissing an initial message alert, snoozing an initial message alert for later review, saving an initial message alert for later review, opening an initial message alert, dismissing the message, snoozing the message for later review, saving the message for later review, reading the message, clicking a link within the message, activating a button within the message, ignoring the message, and taking any other action related to the message. The nature of the behaviour can thus be used to determine whether a message should be sent.

The message feedback data may comprise a deferral flag, wherein the deferral flag indicating that the message should be notified on the electronic device at a later time.

If the message feedback data comprise a deferral flag, the message preference data may be updated to indicate that similar messages should not be notified in the originally-attempted timeslot.

If the message feedback data comprise a deferral flag, the method may further comprise providing notification of the message on the electronic device at a later time.

The method may further comprise the steps of: receiving the message at the electronic device; and providing notification of the message on the electronic device.

The step of providing notification of the message may occur immediately subsequent to the step of receiving the message. Alternatively, the step of providing notification of the message may occur at a delayed time after the step of receiving.

The method may further comprise, between the steps of receiving and providing, the steps of: storing the message in a memory associated with the first electronic device; and retrieving the message from the memory associated with the first electronic device.

The method may also further comprise, between the steps of storing and retrieving, the step of: receiving a trigger signal, wherein the trigger signal indicates that one or more trigger criteria are met by an operating status of the electronic device;

The steps of retrieving and providing notification may only be carried out in response to receipt of the trigger signal.

The message preference data of the method may comprise a threshold message value and a message slot for a given message comprises a message slot demand value. The step of determining of the method may comprise determining whether the threshold value has been reached or passed by the message slot demand value of the message slot. The message slot demand value of the method may be set according to demand for transmission of a given message within the message slot. The message slot demand value of the message slot of the method may be set by the frequency of received requests by third party devices for utilising the message slot.

The method may further comprise, prior to the step of determining whether the threshold value has been reached or passed, the steps of: receiving an operating status of the electronic device; and setting the number of message slots according to the operating status of the electronic device.

The operating status of the electronic device may comprise data indicative of a communications network to which the electronic device is connected.

The number of messages slots may be reduced when the device is connected to a public network.

Alternatively or additionally, the number of message slots may be increased when the device is connected to a private network.

The operating status comprises data indicative of a location of the electronic device as provided by a positioning module of the electronic device.

The step of setting the number of message slots may comprise determining whether the location of the electronic device falls within a designated area.

The method may comprise the step of receiving location data from at least one further electronic device.

If the method comprises the step of receiving location data from at least one further electronic device, the step of setting may comprise determining the number of further electronic devices within a designated area.

The number of message slots for the electronic device may be reduced when the number of electronic devices within the designated area increases. Alternatively or additionally, the number of message slots for the electronic device may be increased when the number of electronic devices within the designated area decreases.

Alternatively or additionally to setting the number of message slots, the method may further comprise, prior to the step of determining whether the threshold value has been reached or passed, the steps of: receiving an operating status of the electronic device; and setting the message slot demand value of at least one message slot according to the operating status of the electronic device.

The operating status of the electronic device may comprise data indicative of a communications network to which the electronic device is connected.

The message slot demand value may be increased when the electronic device connects to a public network. Alternatively or additionally, the message slot demand value may be decreased when the device connects to a private network.

Alternatively or additionally, the operating status may comprise data indicative of a location of the electronic device as provided by a positioning module of the electronic device.

The step of setting the message slot demand value may comprise determining whether the location of the electronic device falls within a designated area.

The method may further comprise the step of receiving location data from at least one further electronic device.

If the method comprises the step of receiving location data from at least one further electronic device, the step of setting may comprise determining the number of further electronic devices within a designated area.

The message slot demand value may be increased when the number of further electronic devices within the designated area increases. Alternatively or additionally, the message slot demand value may be decreased when the number of further electronic devices within the designated area decreases.

The designated area may be defined by a fixed radius around the electronic device. Alternatively, the designated area may be defined by a geo-fence.

### Intelligent Messaging

In a further aspect of the invention, a computer-implemented method for controlling messages transmitted to an electronic device is provided. The method comprises the steps of: receiving context data from at least one context data provider device; receiving preference data associated with the electronic device; determining if the context data and preference data meet one or more trigger criteria; and if the context data and preference data are determined to meet at least one of the one or more trigger criteria: retrieving one or more messages associated with the met trigger criteria; and transmitting the one or more messages to the electronic device.

The context data may comprise current situation data, such as one or more of: weather data, news data, sports data, transportation data, and traffic data.

In a further aspect of the invention, a computer-implemented method for controlling messages transmitted to an electronic device is provided. The method comprises the steps of: receiving operating status data from the electronic device; receiving preference data associated with the electronic device; determining if the operating status data and preference meet one or more trigger criteria; and if the operating status data and preference data are determined to meet at least one of the one or more trigger criteria: retrieving at least one message associated with the at least one met trigger criteria; and transmitting the at least one message to the electronic device.

In a further aspect of the invention, a computer-implemented method for controlling messages transmitted to an electronic device is provided the method comprising the steps of: receiving context data from at least one context data provider device; receiving operating status data from the electronic device; determining if the context data and operating status data meet one or more trigger criteria; and if the context data and operating status data are determined to meet at least one of the one or more trigger criteria: retrieving at least one message associated with the at least one met trigger criterion; and transmitting the at least one message to the electronic device.

The method may further comprise the step of receiving preference data associated with the electronic device, wherein the step of determining further comprises determining if the preference data meet the trigger criteria, and wherein each of the steps of retrieving and transmitting are only performed if the preference data also meet the trigger criteria.

The operating status may comprise data indicative of a location of the electronic device provided by a positioning module of the electronic device.

The step of determining may comprise analysing the received location of the electronic device to determine whether the electronic device is moving along a vehicle pathway, such as a road or railway track.

At least one of the trigger criteria may require that the electronic device is not moving along a vehicle pathway, such as a road or railway track.

The operating status may comprise data indicative of the acceleration of the electronic device provided by an accelerometer and/or gyroscope of the electronic device.

The step of determining may comprise analysing the acceleration data of the electronic device to predict or determine whether the user of the device is engaged in physical activity.

At least one of the trigger criteria may require that the acceleration data does not indicate one or more defined physical activities.

The method may further comprise the step of receiving location data from at least one further electronic device.

The step of determining may comprise determining the number of further electronic devices within a designated area.

The designated area is defined by a fixed radius around the electronic device. Alternatively, the designated area may be defined by a geo-fence.

The preference data may indicate that the electronic device and at least one of the further electronic devices are associated with each other such that the at least one message is transmitted to the electronic device and not to the at least one further electronic device.

The operating status may comprise data indicative of software installed on the electronic device. Alternatively or additionally, the operating status may comprise data indicative of software running on the electronic device. Further alternatively or additionally, the operating status comprises data indicative of a date and/or time held by a clock of the electronic device.

The one or more trigger criteria may comprise a time or a time period, and/or a date or date period.

The preference data may comprise a time or a time period, and/or a date or date period. The time period may be defined as one of: morning, afternoon, evening, breakfast, lunch, or dinner.

The time, time period, date or date period may be a specific time or date at which messages are to be notified.

The method may further comprise the step of determining a predicted future location of the electronic device. The predicted future location may be determined based on a location and movement of the electronic device along a known transport route.

Alternatively or additionally, the predicted future location is determined based on locations previously received for the electronic device.

### Pre-caching of Messages

In a further aspect of the invention, a computer-implemented method for storing and displaying messages on an electronic device is provided. The method comprises the steps of: receiving one or more messages from a server, wherein the one or more messages are associated with at least one trigger criterion; storing the one or more received messages in a memory associated with the electronic device; receiving a trigger signal, wherein the trigger signal indicates that one or more trigger criteria are met by an operating status of the electronic device; retrieving at least one of the one or more messages stored in the memory, wherein the at least one retrieved message is associated with one or more trigger criteria that correspond with the trigger criteria indicated by the trigger signal; and displaying the at least one retrieved message on a display associated with the electronic device.

The step of receiving may only be carried out when the electronic device is connected to a designated communications network.

The step of receiving may not be carried out if the electronic device is connected to a communications network other than a designated communications network.

The step of receiving may only be carried out when the electronic device is at a designated location.

The operating status of the electronic device may comprise data indicative of a location of the electronic device as provided by a positioning module of the electronic device and wherein the one or more trigger criteria comprise defined geographical areas or geo-fences.

The operating status of the electronic device may comprise data indicative of a time held by a clock of the electronic device, and wherein the one or more trigger criteria comprise times or time periods.

The messages received at the step of receiving may be associated with a location of the electronic device.

The method may further comprise the steps of: removing one or more of the received messages from the memory associated with the electronic device.

The step of removing may be preceded by the steps of: receiving one or more updated messages, wherein each of the one or more updated messages corresponds to one or more of the messages stored in the memory associated with the electronic device; and storing the one or more updated messages in the memory associated with the electronic device, wherein the message removed from memory at the step of removing are the messages already stored in the memory of the electronic device that correspond to the one or more updated messages.

At least one of the messages stored in the memory associated with the electronic device may have an associated time to live, and wherein the step of removing may be performed for a message when its associated time to live expires.

At least one of the messages stored in the memory associated with the electronic device may have at least one associated event flag for an event which can occur and which is identifiable by the electronic device.

The step of removing may be performed for a message when an event identified by at least one of its associated event flags has occurred.

The step of removing may be performed for a message when an event identified by at least one of its associated event flags has not occurred.

The step of removing may be performed for a message when a first event identified by at least one of its associated event flags has occurred, and when a second event identified by at least one of its associated event flags has not occurred.

The method may further comprise the step of identifying whether the event has occurred by comparing the operating status of the electronic device with the event flag.

The event flag may comprise data indicative of one or more of: a start time of the event, an end time of the event, duration of the event, a location of the event.

The operating status of the electronic device comprises data indicative of one or more of: a current time and a location of the electronic device.

The aforementioned methods may be implemented by the processing circuitry of the aforementioned electronic devices or servers.

A computer-readable medium is disclosed, comprising computer executable instructions executable by processing circuitry, which, when executed, cause the processing circuitry to perform the steps of any one of the described methods.

### Brief Description of the Drawings

The present disclosure is supported by the accompanying drawings in which:
Fig. 1 depicts an exemplary electronic device in accordance with the electronic devices of this disclosure;
Fig. 2 depicts an exemplary wireless beacon in accordance with the wireless beacons of this disclosure;
Fig. 3 depicts an exemplary server in accordance with the servers of this disclosure;
Fig. 4 is a flow diagram that depicts a method for controlling messages transmitted to an electronic device.
Fig. 5 is a flow diagram that depicts a further method for controlling messages transmitted to an electronic device, taking into account context data and preference data;
Fig. 6 is a flow diagram that depicts a further method for controlling messages transmitted to an electronic device, taking into account an operating status of the electronic device and preference data;
Fig. 7 is a flow diagram that depicts a further method for controlling messages transmitted to an electronic device, taking into account context data and an operating status of the electronic device;
Fig. 8 is a flow diagram that depicts a method for storing and displaying messages on an electronic device;
Fig. 9 depicts an exemplary system comprising multiple electronic devices; and
Fig. 10 depicts an arrangement of messages received at and stored on an electronic device.

### Detailed Description

The following description sets various exemplary embodiments which may fall within the scope of the overall disclosure.

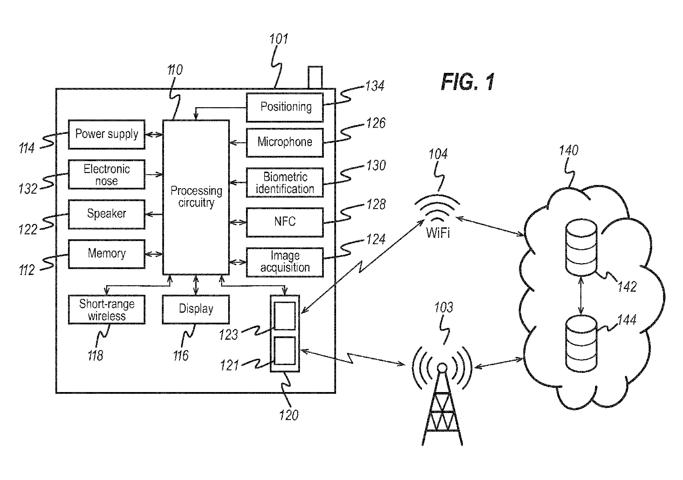

Fig. 1 depicts an exemplary electronic device 101 according to any of the electronic devices of this disclosure. The electronic device comprises processing circuitry 110 (such as a microprocessor) and a memory 112. Electronic device 101 may also comprise one or more of the following subsystems: a power supply 114; a display 116; a short-range wireless transceiver 118; a long-range wireless transceiver 120; a speaker 122; an image acquisition subsystem 124; a microphone 126; a near-field communication (NFC) subsystem 128; a biometric identification subsystem 130; an electronic nose 132, and a positioning module 134. The electronic device may be a portable electronic device such as a handheld electronic device, for example a mobile phone, a smartphone, a tablet computer, a laptop computer, a PDA, or a smartwatch.

Processing circuitry 110 may control the operation of the electronic device 101 and the subsystems 112-132. Processor 110 is communicatively coupled with subsystems 112-132. Memory 112 may comprise one or more of random access memory (RAM), read only memory (ROM), non-volatile random access memory (NVRAM), flash memory, other volatile memory, and other non-volatile memory.

Display 116 may be communicatively coupled with the processing circuitry 110, which may be configured to cause display 116 to output images. Display 116 may comprise an input interface, such as a touch sensitive interface, for example a touch screen display. Display 116 may be used to interact with software that runs on the processor 110 of the electronic device 101, such as to provide confirmation of a transaction and/or to initiate scanning of a machine-identifiable tag. The touch sensitive interface permits a user to provide input to the processing circuitry 110 via a discreet touch, touches, or one or more gestures for controlling the operation of the processing circuitry and the functions described herein. It will be appreciated that other forms of input interface may additionally or alternatively be employed built-in or adjacent to the display 116 for the same purpose, for example, one or more keys or a key pad, or voice interaction via microphone 126.

Short-range wireless transceiver 118 may be a short-range radio that is configured to operate according to a short-range wireless protocol. Short-range wireless transceiver 118 may be configured to communicate via a short-range wireless protocol. The short-range wireless protocol may be Bluetooth, or Bluetooth Low Energy, or Bluetooth Smart, and the short-range wireless transceiver may be configured to communicate with other devices, such as a wireless beacon, according to such a protocol. In this regard and for the purposes of all embodiments herein concerning a short-range wireless protocol, the short-range wireless protocol may be a protocol which is capable and designed for communication over less than 1, 5, 10, 20, 30, 40, 50, or 100m.

Long-range wireless transceiver 120 may be one or more long-range RF transceivers that are configured to operate according to communication standard such as LTE, UMTS, 3G, EDGE, GPRS, GSM, and Wi-Fi. For example, electronic device 101 may comprise a first long-range wireless transceiver 121, such as a cellular transceiver, that is configured to communicate with a cell tower 103 via to a cellular data protocol such as LTE, UMTS, 3G, EDGE, GPRS, or GSM, and a second long-range wireless transceiver 123, such as a Wi-Fi transceiver, that is configured to communicate with a wireless access point 104 via to a Wi-Fi standard such as 802.11 ac/n/g/b/a. In this regard and for the purposes of all embodiments herein concerning a long-range wireless protocol, a long-range wireless protocol may be a protocol which is capable and designed for communication over 5, 10, 20, 30, 40, 50, or 100m. This is in contrast to short-range wireless protocol mentioned above. The long-range wireless protocol may communicate utilizing higher power than the short-range wireless protocol. The range (e.g. line of sight distance) between the long-range end nodes (electronic device and router or base station) for the long-range wireless protocol may be greater than the range (e.g. line of sight distance) between the short-range end nodes (e.g. electronic device and wireless beacon).

Input subsystems 124 to 132 may be used to capture one or more of machine-identifiable tags, biometric data for use in any of the methods hereinbefore described. For example, image acquisition subsystem 122, such as a camera, may be configured to detect light in the visible range of the electromagnetic spectrum, and is capable of acquiring one or more images of machine-identifiable tags, such as QR codes and/or of capturing images of particular goods or products. The processing circuitry 110 is configured to process such images and identify the data contained therein, for example the data indicative of a transaction in a machine-identifiable transaction tag. Microphone 126 may be configured to detect one or more of machine-identifiable tags, such as an audio watermark, or user input such, such as speech in response to a message with the text "Speak to Buy". NFC subsystem 128 may be configured to detect NFC machine-identifiable tags. Biometric identification subsystem 130 may comprise a fingerprint reader, which may be configured to be used to authenticate a user of the electronic device 101 for one or more of the various functions outlined above. Electronic nose subsystem 132 may comprise one or more devices capable of detecting and/or identifying an odor. Positioning module 134 is capable of determining a location of the electronic device 101 using various known method, for example GPS signals, A-GPS, cellular triangulation, Wi-Fi location systems or any other known position determination means. The positioning module 134 may also be capable of determining a direction in which the electronic device is pointed or moving, for example by using a built in compass or by analyzing location data over time. The positioning module 134 outputs location data corresponding to the determined location to the processing circuitry 110.

Electronic device 101 may be configured to communicate via the long-range wireless transceiver 120 with a network 140. Network 140 may be a wide area network, such as the Internet, or a local area network. Electronic device 101 may be further configured to communicate via long-range wireless transceiver 120 and network 140 with one or more servers 142, 144. It will be appreciated that the servers 142, 144 are exemplary and that any numbers of physical or virtual servers may be used in the methods described herein. The servers 142, 144 may be co-located or distributed over network 140, or any other network to which all servers are connected.

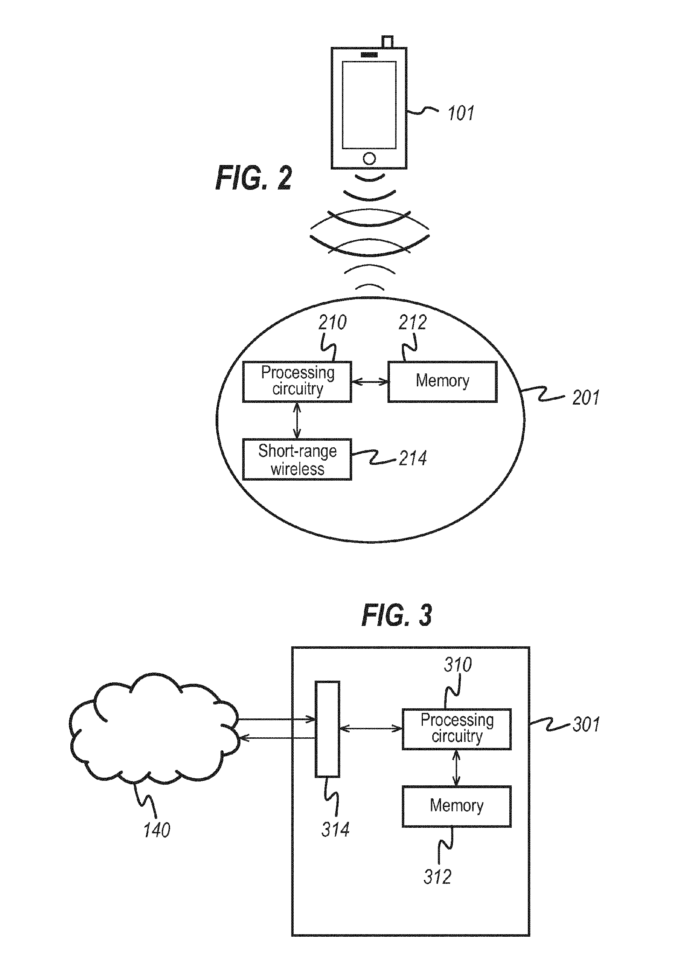

Fig. 2 shows an exemplary wireless beacon 201 according to any of the wireless beacons of this disclosure. Wireless beacon 201 may be configured to communicate with electronic device 101. Wireless beacon 201 may comprise processing circuitry 210 that is communicatively coupled with a memory 212 and a short-range wireless transceiver 214. Processing circuitry 210 may control the operation of the wireless beacon 201 and the memory 212 and short-range wireless transceiver 214. Memory 212 may comprise one or more of random access memory (RAM), read only memory (ROM), non-volatile random access memory (NVRAM), flash memory, other volatile memory, and other non-volatile memory. As described above, the short-range wireless protocol may be Bluetooth, or Bluetooth Low Energy, or Bluetooth Smart, and the short-range wireless transceiver 214 may be configured to communicate with the electronic device 101 according to such a protocol. In this regard and for the purposes of all embodiments herein concerning a short-range wireless protocol, the short-range wireless protocol may be a protocol which is capable and designed for communication with the electronic device 101 over less than 1, 5, 10, 20, 30, 40, 50, or 100m.

Fig. 3 shows an electronic device which is an exemplary server 301 according to any of the servers of this disclosure (such as servers 142, 144). Server 301 comprises processing circuitry 310 communicatively coupled with a memory 312 and a network interface 314. Processing circuitry 310 may control the operation of the server 301 and the memory 312 and network interface 314. Memory 312 may comprise one or more of random access memory (RAM), read only memory (ROM), non-volatile random access memory (NVRAM), flash memory, other volatile memory, and other non-volatile memory. Server 301 is connected via network interface 314 with the network 140, such as the Internet. Server 301 may be connected via network interface 314 and network 140 with the electronic device 101 and/or with other servers.

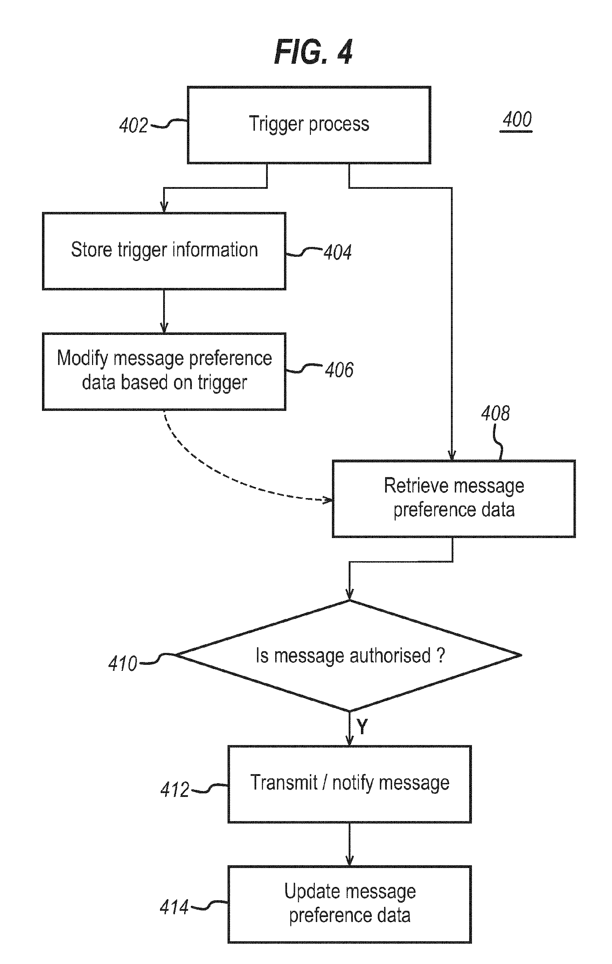

Fig. 4 depicts an example process 400 for controlling messages that are transmitted to or notified on an electronic device. In one embodiment, the process 400 may be carried out on a server 301. In an alternative embodiment, process 400 is carried out on an electronic device 101. Controlling messages that are transmitted to or notified on an electronic device in a method according to the embodiments below prevents the unnecessary use of the long-range wireless connection with the electronic device 101 and prevents the unnecessary use of the display 116, speaker 122, and/or vibration functionality of the electronic device 101 in notification of the messages. Both of these effects have the advantage of limiting the power usage and preserving the battery life of the electronic device 101, as well as preventing frequent intrusions of message notifications.

For the purposes of this disclosure, a message may be a packet of data comprising one or more of: text, images, video, audio, binary data or any other data that can be interpreted by electronic device 101 and/or displayed on its display 116. When notified on the electronic device 101, the message may be displayed on display 116 and may be selectable via interaction with the display 116 or input interface. The message may be selectable via the display 116 or input interface so as to enable interaction with the content of the message, such as displaying message content, e.g. text, images, video, playing video, or displaying additional images, playing other audio stored in the memory 112 or obtained from a remote location, or displaying and receiving input at an interface generated according to code executed by the processing circuitry 110 which may be included in the message or already pre-stored in the memory 112.

Interaction via the input interface with the message notified on the device 101 may also trigger the processing circuitry 110 to access additional information associated with the message, such as additional content located on a remote server accessible via one or both of networks 103, 104, the location (e.g. URL) of such content being identifiable by the message. The content of the message or associated additional content may also be representative of or associated with offers of goods for sale, current situation data, such as for example weather, news or traffic, and/or may be an advertisement for one or more products or services.

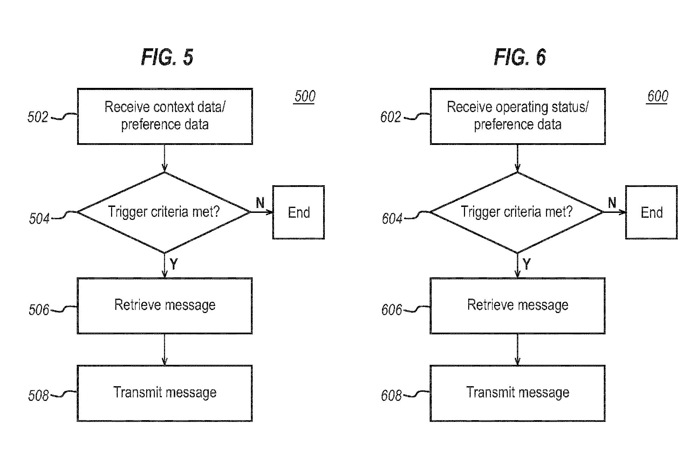

In the first embodiment, process 400 is carried out on a sever 301. At step 402 the process is triggered. The process trigger may be a positive determination by the server 301 that a wireless beacon 201 is in communication with an electronic device 101. Alternatively, the process trigger may be a positive determination by the server 301 that the electronic device 101 has entered a geo-fence. Also alternatively, the process trigger may be a positive determination by the server 301 that one or more of a push message, a SMS message, an in-app pop-up message, or a website pop-up message should be transmitted to the electronic device. Additional triggers for the process 400 are described with respect to Figures 5 to 7 below.

At optional step 404, process trigger information is stored. The process trigger information may be stored in a database. The process trigger information may be a flag which is indicative of whether a message should be notified on the electronic device 101.

If the process trigger is a positive determination that a wireless beacon is in communication with the electronic device, the process trigger information is beacon information. The beacon information for each wireless beacon can comprise one or more of: identification information of the beacon; a time at which the wireless beacon was detected by the electronic device; a geographical location at which the wireless beacon was detected; a time at which a last message was transmitted to the electronic device in response to detection of the wireless beacon; and a content type or category associated with the beacon.

If the process trigger is a positive determination that the electronic device has entered a geo-fence, the process trigger information may be geo-fence information. Geo-fence information can comprise one or more of: identification information of the geo-fence; a time at which the electronic device entered the geo-fence; and a time at which a last message was transmitted to the electronic device in response to detection of the electronic device entering the geo-fence.

If the process trigger is a positive determination that a message, for example one or more of a push message, a SMS message, an in-app pop-up message, or a website pop-up message should be transmitted to the electronic device, the process trigger information is stored for detection in process 410.

At optional step 406, message preference data, which may be stored in a database, is modified based on the process trigger. The database in which message preference data may be stored may be the same as or different to the database in which process trigger information is stored.

The message preference data comprises one or more criteria that must be satisfied for a message to be transmitted to or notified on the electronic device. The message preference data may comprise one or more of: a maximum frequency by which messages can be transmitted to the electronic device; maximum frequency with which messages can be notified on the electronic device; a time of day, month, or year at which messages can be transmitted to the electronic device; a time of day, month, or year at which messages can be notified on the electronic device; and one or more of likes, dislikes, topics, and types or messages, and behaviours resultant from the message alert or the message, all of which can be set with a respective flag garnered from feedback. Feedback resultant from the message alert or the message may be a record of the actions a user has previously taken in response to the message, such actions including one or more of opening the message, following a link embedded in the message, ignoring the initial message alert, dismissing an initial message alert, snoozing an initial message alert for later review, saving an initial message alert for later review, opening an initial message alert, dismissing the message, snoozing the message for later review, saving the message for later review, reading the message, clicking a link within the message, activating a button within the message, ignoring the message, or taking any other action related to the message.

Additionally or alternatively, message preference data may comprise information such pertaining specifically to a user. This user information may comprise one or more of: the amount of money a user spends on goods or services within a given time period, such as per week, month, or year; the amount of money the user spends on particularly categories of goods or services within a given time period, such as per week, month, or year; the locations at which the user purchases or commonly purchases goods or services; whether a user has purchases goods or services in a particular category within a given time period, such as within the previous day, week, month, or year; a prediction as to whether the user is interested in a particular category of goods or services. The user information may be used as part of the message preference data in determining step 410.

The message preference data may also comprise the process trigger information described above. It will be appreciated that any other criteria that may be relevant for determining whether a message is of interest to or otherwise appropriate to be transmitted to or notified on the electronic device may additionally or alternatively form part of the message preference data.

Steps 404 and 406 are optional steps of the method and only one step or both steps may be performed or not performed. Steps 404 and 406, if carried out, may be carried out synchronously with the other steps of the method, i.e. the steps are begun and completed before moving onto the next step, or asynchronously with the other steps of the method, i.e. the other steps of the method may be carried out before step 404 or 406 has been begun or completed. Furthermore, steps 404 and 406 may be carried out asynchronously with respect to one another provided that step 406 does not depend on the trigger information stored in step 404.

At step 408, message preference data is retrieved. If the message preference data is stored in a database, it is retrieved from the database.

At step 410, it is determined whether a message is authorised for transmission to the electronic device. The determination may comprise determining if a particular process trigger has occurred within a predetermined period of time. The determination may be carried out by processing circuitry 310. For example, if the process trigger is a positive determination that a wireless beacon 201 is in communication with the electronic device 101, it may be determined by processing circuitry 310 at step 410 whether the wireless beacon 201 has been in communication with the electronic device within the previous 12 hours. Step 410 may additionally or alternatively comprise comparing the message preference data to characteristics of the message. For example, where the message preference data comprises one or more of likes, dislikes, topics, and types or messages, it may be determined by the processing circuitry 310 that the message is of the correct topic or content type to be transmitted to the electronic device 101. It will be appreciated that the determination in step 410 may be carried out based on any combination of one or more of the examples of the message preference data described herein. If the determination that the message is authorised for transmission to the electronic device 101 is positive, the method continues to step 412. If the determination is negative, the method terminates at step 410.

At step 412, the message is transmitted to the electronic device 101. The message may comprise one or more of: a push message, an email message, a SMS message, an in-app pop-up message, or a website pop-up message should be transmitted to the electronic device, and storing information related to the one or more of a push message, text message, such as an SMS message, an in-app pop-up message, or a website pop-up message in a second database. The message can be displayed in the display 116 or played on the speaker 112 if it is an audible message. The display 116 and speaker 112 may act in conjunction if the message is a video message for video playback with sound. At optional step 414, the message preference data may be updated. The message preference data may be updated based on the characteristics of the message that was transmitted in step 412. The characteristics of the message can comprise one or more of: the time at which the message was sent; the content type of the message; the location of the electronic device 101 at which the message was sent; a wireless beacon 201 that was determined to be in communication with the electronic device 101 which caused the process to be triggered; a geo-fence within which the electronic device 101 was determined to be location which caused the process to be triggered; and the process trigger which caused the message to be sent. The message preference data may also be updated according to feedback received from the electronic device 101. The feedback received from the electronic device may be caused by user feedback via the input interface of the device 101, for example one or more of opening the message, following a link embedded in the message, ignoring the initial message alert, dismissing an initial message alert, snoozing an initial message alert for later review, saving an initial message alert for later review, opening an initial message alert, dismissing the message, snoozing the message for later review, saving the message for later review, reading the message, clicking a link within the message, activating a button within the message, ignoring the message, or taking any other action related to the message. For example, if a user of the electronic device 101 opens a message and follows a link embedded in the message, the message preference data may be updated to indicate that the user is interested in the content type that is linked to. Furthermore, the feedback may comprise a deferral flag, which indicates that the message should be notified on the electronic device at a later time. The later time may be specified by a user of the electronic device and may be selected from a list of time intervals, a time interval input by the user, a future time selected from a list of future times or a future time input by the user. The message may then be notified on the electronic device after the time interval or at the later time selected or specified by the user. After receiving the feedback data from the electronic device, the method may further comprise updating the message preference data to indicate that similar messages should not be notified in the originally-attempted timeslot in future. Step 414 may be carried out simultaneously or asynchronously with step 412 if step 414 does not depend on feedback from the electronic device 101 or on successful transmission of the message at step 412.

In a second embodiment, process 400 is carried out on the electronic device 101. At step 402 the process is triggered. The process trigger may be a positive determination by the electronic device 101 that a wireless beacon 201 is in communication with an electronic device 101. Alternatively, the process trigger may be a positive determination by the electronic device 101 that the electronic device 101 has entered a geo-fence. Also alternatively, the process trigger may be a positive determination by the electronic device 101 that an in-app pop-up message should be notified on the electronic device.

At optional step 404, process trigger information is stored. The process trigger information may be stored in a database. The database may be local to the electronic device 101 and/or stored on a sever 301 in communication with the electronic device via the long-range wireless transceiver 120.

If the process trigger is a positive determination that a wireless beacon is in communication with the electronic device, the process trigger information is beacon information. The beacon information for each wireless beacon can comprise one or more of: identification information of the beacon; a time at which the wireless beacon was detected by the electronic device; a geographical location at which the wireless beacon was detected; a time at which a last message was transmitted to the electronic device in response to detection of the wireless beacon; and a content type or category associated with the beacon.

If the process trigger is a positive determination that the electronic device has entered a geo-fence, the process trigger information may be geo-fence information. Geo-fence information can comprise one or more of: identification information of the geo-fence; a time at which the electronic device entered the geo-fence; and a time at which a last message was transmitted to the electronic device in response to detection of the electronic device entering the geo-fence.

If the process trigger is a positive determination that an in-app pop-up message should be notified on the electronic device, the process trigger information can comprise an indication that the message should be notified. The notification may comprise the message itself.

At optional step 406, message preference data, which may be stored in a database, is modified based on the process trigger. The database in which message preference data may be stored may be the same as or different to the database in which process trigger information is stored. The database in which message preference data is stored may be local to the electronic device 101 and/or stored on a sever 301 in communication with the electronic device via the long-range wireless transceiver 120.

Steps 404 and 406 are optional steps of the method and only one step or both steps may be performed or not performed. Steps 404 and 406, if carried out, may be carried out synchronously with the other steps of the method, i.e. the steps are begun and completed before moving onto the next step, or asynchronously with the other steps of the method, i.e. the other steps of the method may be carried out before step 404 or 406 has been begun or completed. Furthermore, steps 404 and 406 may be carried out asynchronously with respect to one another provided that step 406 does not depend on the trigger information stored in step 404.

At step 408, message preference data is retrieved. If the message preference data is stored in a database, it is retrieved from the database.

At step 410, it is determined whether a message is authorised for notification on the electronic device 101. The determination may comprise determining if a particular process trigger has occurred within a predetermined period of time. The determination may be carried out by processing circuitry 110. For example, if the process trigger is a positive determination that a wireless beacon 201 is in communication with the electronic device 101, it may be determined by processing circuitry 110 at step 410 whether the wireless beacon 201 has been in communication with the electronic device within the previous 12 hours. Step 410 may additionally or alternatively comprise comparing the message preference data to characteristics of the message. For example, where the message preference data comprises one or more of likes, dislikes, topics, and types or messages, it may be determined by the processing circuitry 110 that the message is off the correct topic or content type to be notified on the electronic device 101. It will be appreciated that the determination in step 410 may be carried out based on any combination of one or more of the examples of the message preference data described herein. If the determination that the message is authorised for notification on the electronic device 101 is positive, the method continues to step 412. If the determination is negative, the method terminates at step 410.

At step 412, the message is notified on the electronic device 101. The message may be one or more of: a push message, an email message, a SMS message, an in-app pop-up message, or a website pop-up message should be transmitted to the electronic device, and storing information related to the one or more of a push message, text message, such as an SMS message, an in-app pop-up message, or a website pop-up message in a second database. The message can be displayed in the display 116 or played on the speaker 112 if it is an audible message. The display 116 and speaker 112 may act in conjunction if the message is a video message for video playback with sound. At optional step 414, the message preference data may be updated. The message preference data may be updated based on the characteristics of the message that was transmitted in step 412. The characteristics of the message can comprise one or more of: the time at which the message was sent; the content type of the message; the location of the electronic device 101 at which the message was sent; a wireless beacon 201 that was determined to be in communication with the electronic device 101 which caused the process to be triggered; a geo-fence within which the electronic device 101 was determined to be location which caused the process to be triggered; and the process trigger which caused the message to be sent. The message preference data may also be updated according to the interaction of a user with the message on electronic device 101. The feedback may be caused by user interaction with the device 101, for example one or more of opening the message, following a link embedded in the message, ignoring the initial message alert, dismissing an initial message alert, snoozing an initial message alert for later review, saving an initial message alert for later review, opening an initial message alert, dismissing the message, snoozing the message for later review, saving the message for later review, reading the message, clicking a link within the message, activating a button within the message, ignoring the message, or taking any other action related to the message. For example, if a user of the electronic device 101 opens a message and follows a link embedded in the message, the message preference data may be updated to indicate that the user is interested in the content type that is linked to.

Step 414 may be carried out simultaneously or asynchronously with step 412 if step 414 does not depend on feedback from the electronic device 101 or on successful transmission of the message at step 412.

In both the first and second embodiments, the message preference data may further comprise a threshold message value and a message slot a message slot demand value for a given message. The threshold message value is a minimum value of the message slot demand value that must be reached or passed in order for a message to be transmitted to or notified by the electronic device 101. The message slot demand value may be set according to demand for transmission of a given message within the message slot. To illustrate: the electronic device 101 may have a pre-determined, finite number of message slots for receiving messages from the server 301 or for notification of messages on the electronic device 101 itself. Each of these message slots may be assigned a message slot demand value. The message slot demand value may be set according to the demand for the message slot. For example, this may be determined according to the frequency with which requests are received from third party devices (i.e. devices that are not the electronic device 101 in the second embodiment, or the server 301 or electronic device 101 in the first embodiment) to utilise said message slot.

The method 400 may further comprise the steps of receiving an operating status of the electronic device 101 and subsequently setting the number of message slots and/or the message slot demand value according to the received operating status of the device. The operating status of the electronic device 101 may comprise data indicative of one or more of: a communications network to which the electronic device 101 is connected, and a geographic location of the electronic device 101 as provided by a positioning module of the electronic device 101.

The method may determine the type of network that is indicated in the operating status of the device. For example, the electronic device 101 may be connected to a public network or a private network. In the context of this application, a public network may be an unsecured wireless network, e.g. a Wi-Fi network that does not employ a security protocol such as WEP or WPA/WPA2 or a cellular data network such as 3G or LTE, or a private network, e.g. a Wi-Fi network that does employ a security protocol. The operating status may also indicate other aspects of the wireless network, such as the type of connection that the electronic device 101 is using, e.g. a GPRS, EDGE, HSPA or other mobile communication protocols.

If the operating status indicates that the electronic device 101 connects to a public network, the number of message slots may be decreased and/or the message slot demand value may be increased. By decreasing the number of available message slots or increasing the message slot demand value, the number of messages sent to the electronic device 101, and other electronic devices connected to the same network, is reduced, thus reducing the network traffic on the public network and improving service quality. Conversely, the number of message slots may be increased and/or the message slot demand value may be decreased when the operating status indicates that the electronic device 101 connects to a private network. By increasing the number of message slots or reducing the message slot demand value, the method can take advantage of the greater resources likely to be provided by a private network.

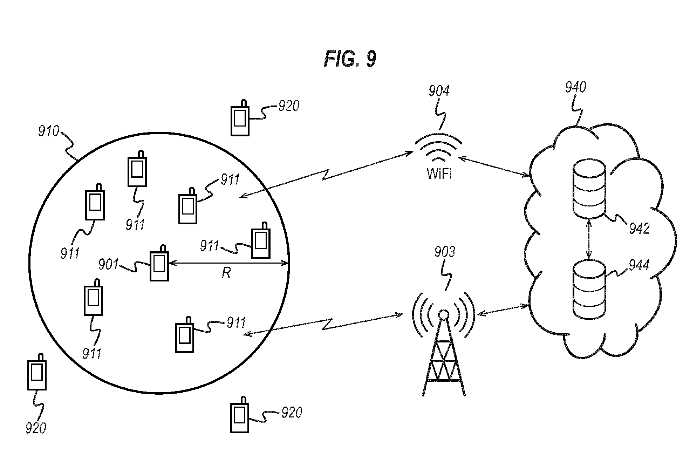

The operating status may additionally or alternatively comprise data indicative of a geographic location of the electronic device 101. The method may further comprise the step of receiving location data from at least one further electronic device, and the step of setting the number of message slots and/or the message slot demand value may take the number of electronic devices in a designated area into account. The designated area may be a geographic area defined by a geo-fence, or may be defined by a fixed radius around the electronic device 101 as depicted in Fig. 9 by the circle 910 with radius R around electronic device 901, where further electronic devices 911 fall within the defined area, and further electronics device 920 do not. When the number of electronic devices 911 in the designated area increases, the number of available message slots may be decreased and/or the message slot demand value may be increased. By decreasing the number of message slots or increasing the message slot demand value, the number of messages transmitted to each user in the designated area decreases, reducing the network traffic over cellular data connections in the area. Conversely, by increasing the number of message slots or decreasing the message slot demand value as the number of devices in the designated area decreases, more messages may be sent to each electronic device, taking advantage of the increased availability of network resources.

As mentioned above, Fig. 9 depicts an example arrangement of servers 942, 944 on which method 400 may be carried out and electronic devices 901, 911, 920 in communication with the server 942, 944. The servers 942, 944 are connected to a network 940, such as the Internet, and are connected via network 940 and via a Wi-Fi access point 904 and/or cell tower 903 with electronic devices 901, 911, 920. The servers 942, 944 may carry out method 400, 500, 600 and/or 700 for each electronic device 901, 911, 920 that is connected. Each electronic device 901, 911, 920 may carry out method 400 and/or method 800.

Furthermore, the electronic devices 901, 911, 920 may be in communication with one another via the Internet, Wi-Fi 904, Bluetooth, cellular connection 903, or any other communication technology. The electronic devices 901, 911, 920 may be capable of swapping messages from one device to another. When a message is swapped from one electronic device to another, it may be removed from the original electronic device such that the message only exists in the memory of the receiving electronic device. Such a system may be utilised by users of the electronic devices to provide messages which they believe are more relevant to users of other electronic devices. By enabling the swapping of messages between electronic device 901, 911, 920, via a communications network other than the one used to provide the messages to the electronic devices from method 400, 500, 600,or 700, the number of messages sent over that network is reduced, thus reducing the strain on that network.

Fig. 5 is a flow diagram depicting a method 500 for controlling messages transmitted to an electronic device 101. The method 500 may be carried out on a server in communication with electronic device 101. At step 502, context data and preference data are received by the server 301. The context data may be data indicative of events or conditions which affect the user of the electronic device 101. For example, the context data and preference data may be received in any order. The context data is received from one or more context data provider devices. The context data may comprise current situation data such as weather data, news data sports data, transport/traffic data, or any other data that may be relevant to the user of the electronic device 101. The context data may be provided by various third parties via individual context data provider devices such as network-connected servers. Alternatively, the context data may be collected and aggregated by an intermediate context data provider device, which then provides the context data to the server 301. The preference data is preference data associated with the electronic device 101 and may be the message preference data described above with respect to method 400. The preference data may be stored in memory on the server 301 and retrieved from the memory at step 502, or may be received from another server. At step 504, it is determined whether the context data and preference data meet one or more trigger criteria. The trigger criteria are set according to a desired set of conditions under which messages should be sent to an electronic device 101. For example, the trigger criteria may require that the preference data indicates a particular sports team, and requires that the context data indicates that the sports team has won or lost a match. If the context data and preference data do not meet any of the trigger criteria, then no further action is taken. If the context data and preference data do meet one or more of the trigger criteria, then the method progresses to step 506.

At step 506, messages associated to the trigger criteria are retrieved. The messages may be retrieved from a memory 312 of the server 301, or from another device. For example, if the trigger criteria are that the preference data indicate a particular sports team and that the context data indicate that the sports team has lost, the message may include text indicating the result and providing a coupon for a free drink. It will be appreciated that multiple trigger criteria which are associated with multiple messages may be met and thus multiple messages may be retrieved at step 506.

At step 508, the message retrieved at the step 506 may be transmitted to the electronic device 101 for notification on the electronic device 101. The message may simply be transmitted to the electronic device at step 508 or, processing may continue with method 400, with the steps of method 500 constituting step 402 of method 400.

Fig. 6 is a flow diagram depicting a method 600 for controlling messages transmitted to an electronic device 101, similar to method 500. Again, the method 600 may be carried out on a server in communication with electronic device 101.

At step 602, an operating status of the electronic device 101 and preference data are received by the server 301. The operating status and preference data may be received in any order. The operating status is received from the electronic device 101 and may comprise data indicative of an operating status of the electronic device or any of its modules, such as data indicative of: a location and/or direction of movement of the electronic device provided by a positioning module, a communication network to which the electronic device 101 is connected, an acceleration measured by an accelerometer/gyroscope of the electronic device 101, software installed on the electronic device 101, and/or software currently running on the electronic device 101. The preference data is preference data associated with the electronic device 101 and may be the message preference data described above with respect to method 400. The preference data may be stored in memory 312 on the server 301 and retrieved from the memory 312 at step 562, or may be received from another server.

At step 604, it is determined whether the operating status and preference data meet one or more trigger criteria. The trigger criteria are set according to a desired set of conditions under which messages should be sent to an electronic device 101. The trigger criteria may require that the operating status indicates that the user of the electronic device is within a defined geographic area. The defined geographic area may be one or more defined buildings. For example, the area may be a shopping centre, and that the preference data indicate that the user is interested in menswear. If the trigger criteria are met by the operating status and the preference data, then the method progresses to step 606; if not, the process ends.

At step 606, messages associated with the trigger criteria are retrieved. The messages may be retrieved from a memory 312 of the server 301, or from another device. For example, if the trigger criteria are that the electronic device is located in a shopping centre, and that the user is interested in menswear, the message may include text indicating that a sale is on at a menswear retailer with a store in the shopping centre and/or provide a coupon for a discount in the store. It will be appreciated that multiple trigger criteria which are associated with multiple messages may be met and thus multiple messages may be retrieved at step 606.

At step 608, the message retrieved at the step 606 may be transmitted to the electronic device 101 for notification on the electronic device 101. The message may simply be transmitted to the electronic device at step 608 or, processing may continue with method 400, with the steps of method 600 constituting step 402 of method 400.

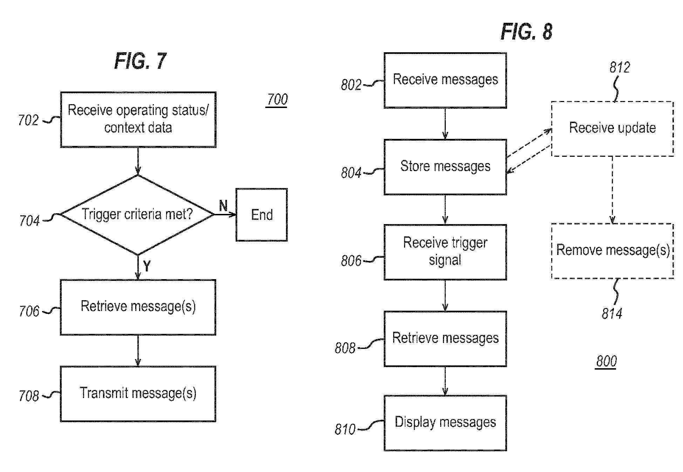

Fig. 7 is a flow diagram depicting a method 700 for controlling messages transmitted to an electronic device 101, similar to methods 500 and 600. Again, the method 700 may be carried out on a server in communication with electronic device 101.

At step 702, an operating status of the electronic device 101 and context data are received by the server 301. The operating status and context data may be received in any order. The operating status is received from the electronic device 101 and may comprise data indicative of an operating status of the electronic device or any of its modules, such as data indicative of: a location and/or direction of movement of the electronic device provided by a positioning module, a communication network to which the electronic device 101 is connected, an acceleration measured by an accelerometer/gyroscope of the electronic device 101, a time or date held by a clock of the electronic device 101, software installed on the electronic device 101, and/or software currently running on the electronic device 101. The context data may comprise current situation data such as weather data, news data sports data, transport/traffic data, or any other data that may be relevant to the user of the electronic device 101. The context data may be provided by various third parties via individual context data provider devices such as Internet-connect servers. Alternatively, the context data may be collected and aggregated by an intermediate context data provider device, which then provides the context data to the server 301.

At step 704, it is determined whether the operating status and context data meet one or more trigger criteria. The trigger criteria are set according to a desired set of conditions under which messages should be sent to an electronic device 101. For example, the trigger criteria may require that the operating status indicates that the user of the electronic device is within a defined geographic area and that the context data indicate that it is raining in that geographic area. The trigger criteria may impose conditions related to any operating status of the electronic device 101 that can be provided to the server. For example, the trigger criteria may require that the operating status indicates that a particular time and/or date is held by the electronic device 101, or that a time held by the electronic device 101 falls within a defined time period and/or date period. If the trigger criteria are met by the operating status and the context data, then the method progresses to step 606; if not, the process ends.

At step 706, messages associated with the trigger criteria are retrieved. The messages may be retrieved from a memory 312 of the server 301, or from another device. For example, if the trigger criteria are the operating status indicates that the user of the electronic device is within a defined geographic area and that the context data indicate that it is raining in that geographic area, the message may include an advertisement for umbrellas and/or provide a coupon for a discount on umbrellas in a store located within the geographic area. It will be appreciated that multiple trigger criteria which are associated with multiple messages may be met and thus multiple messages may be retrieved at step 706.

At step 708, the message retrieved at the step 706 may be transmitted to the electronic device 101 for notification on the electronic device 101. The message may simply be transmitted to the electronic device at step 708 or, processing may continue with method 400, with the steps of method 700 constituting step 402 of method 400.

The method 700 may also include receiving preference data at step 702, similarly to methods 500 and 600. The determination at step 704 may then also take preference data into account when determining whether any trigger criteria are met. For example, the trigger criteria may require that the operating status indicates that the electronic device is located at or near a sports venue, that the preference data indicates a particular sports team, and that the context data indicates that the sports team has won the match that was played at the sports venue. If these criteria are met, a message may be transmitted to the electronic device including a message of congratulations and a coupon for a product that can be bought at the sports stadium.

Furthermore, method 700 may include additional processing or analysis of the operating status/context data received. For example, the operating status may be processed to predict a behaviour or an activity of the user of the electronic device, e.g. analysing the location data to determine whether the electronic device, and hence the user of the electronic device, is moving along a road or other vehicle pathway; analysing accelerometer data to determine whether the user of electronic device is engaged in exercise such as running, cycling, or other physical activity, or whether the user is not moving. Additionally, several different types of operating status data may be analysed in combination to determine or predict the behaviour or an activity of the user of the electronic device, for example, determining whether the user is cycling based on accelerometer data and changing location data. The method may also comprise predicting a future location of the electronic device, based on previously or contemporaneously received location data and/or preference data. For example, if an electronic device was located at a train station, and is now moving along the appropriate railway track to arrive at a particular destination, it can be predicted that the electronic device will arrive at that destination at scheduled time for the train. Trigger criteria may require that an electronic device is predicted to be travelling to a particular location and/or arriving at a particular location at a particular time. Alternatively or additionally, preference data could include special designated locations, such as home and/or work. By analysing past location and time data of the electronic device 101, it can be predicted when a device will be present at one of the special designated locations. Furthermore, by analysing past location and time data, it can be predicted when an electronic device will be present at other locations.

Method 700 may further comprise the steps of receiving location data from at least one further electronic device. They method may then determine the number of further electronic devices in a designated area. The designated area may be a geographic area defined by a geo-fence, or may be defined by a fixed radius around the electronic device 101 as depicted in Fig. 9 by the circle 910 with radius R around electronic device 901, where further electronic devices 911 fall within the defined area, and further electronics device 920 do not. Trigger criteria may place requirements on the number of further electronic devices in a defined area, for example that there are fewer than an upper limit of further electronic devices in the defined geographic area.

If method 700 comprises receiving location data from at least one further electronic device, a determination may be made as to whether the electronic device 101 and any further electronics device are associated with each other. The electronic device and further electronic devices may be associated with each in the preference data. For example, a husband and wife may share a family user account that is used in the method 700. If so, the electronic devices of the husband and the wife may be associated with one another in the preference data. When the location data of the electronic device 101 and at least one associated further electronic device are both within a designated area, for example a fixed radius around the electronic device 101, the method 700 may only send the message to either the electronic device of the further electronic device. Which electronic device receives the message may be determined based on further aspects of the preference data or trigger criteria.

Fig. 8 depicts a method 800 for storing and displaying messages on an electronic device. The method 800 may be carried out on an electronic device such as electronic device 101.

At step 802, one or more messages are received at the electronic device 101, wherein each of the one of more messages is associated with at least one trigger criterion. At step 804, the received messages are stored in a memory 112 of the electronic device 101.

At step 806, a trigger signal is received. The trigger signal indicates that one or more trigger criteria are met by an operating status of the electronic device 101. When the trigger signal is received, one or more of the messages may be retrieved at step 808 from the one or more messages stored in the memory 112. The retrieved messages are associated with the trigger criteria received in the trigger signal.

At step 810, the retrieved message or messages are displayed on a display associated with the electronic device. Following the display of the message, the retrieved message may be deleted from the memory 112.

The method 800 enables messages to be pre-cached on the electronic device 101 such that they can be triggered and displayed at a later time without requiring using of a communication network. Hence, messages can be displayed on the electronic device 101 when no network connection is available.

For example, step 802 may only be carried out when the electronic device is connected to a designated communications network, such as a Wi-Fi network, and/or may only be carried out when the electronic device 101 is located in a defined geographic region. By only carrying out step 802 when connected to a designated network, such as a Wi-Fi network, the traffic on other networks such as mobile or cellular data networks is reduced, helping to avoid reaching data allowance caps for cellular devices. By only carrying out step 802 when the electronic device is located in a defined geographic region, such as a particular country, or by only carrying out the step when connected to a designated network, data roaming charges for using mobile network data for the messages can be avoided.

Furthermore, by pre-caching messages according to method 800, the lag between the operating status fulfilling a trigger criterion and receiving and displaying a message is minimised, since the time required to download the message from a remote device such as server 301 is eliminated.

As an example, if a user is roaming on a non-native mobile phone network, the electronic device 101 (e.g. a cellular phone) may receive and store message according to steps 802 and 804 while connected to a Wi-Fi network, such as Wi-Fi in the hotel, thereby avoiding data roaming charges from the mobile network. When the user leaves the hotel and passes a particular location, for example a landmark such as a museum or a particular shop, the operating status of the device meets a trigger criterion for that location, and a trigger signal is generated. The appropriate message for that location, e.g. landmark, such as a voucher for entry to the museum, is then retrieved from the memory 112 of electronic device 101 and displayed, again without using the data connection of the mobile network and incurring roaming charges for the data in respect of the messages.

The trigger criteria may also comprise a specific time or a time period at or during which a trigger signal is generated. In such a situation, the operating status of the electronic device may comprise data indicative of a time held by a clock of the electronic device. The time or time period might be one of: morning, afternoon, evening, night, breakfast, lunch, or dinner. For example, a restaurant may wish to send a message containing details of a lunchtime offer to users of electronic devices, in which case the trigger criteria may be the operating status indicates that the time is lunchtime, which may be defined at 12PM to 2PM. If the operating status indicates that the time falls within this period, the trigger criteria are met. If any other trigger criteria for the message are also met, the message may be retrieved from the memory and presented on the electronic device.

The method 800 may further comprise optional steps 812 and/or 814. At step 812, one or more update messages are received by the electronic device 101, wherein each update message corresponds to one or more of the messages stored in the memory 112 associated with the electronic device 101. Each update message may instruct the electronic device to store one or more new messages in the memory 112 and delete one or more existing message from the memory 112. For example, each update message may correspond to one or more of the messages stored in memory 112, and is intended to replace the one or more stored messages. Any messages to be removed from the memory are removed at step 814. Additionally or alternatively, each message received at the electronic device and stored in the memory 112 may have an associated time to live (TTL), which defines a length of time from the message's creation, from the time it is received by the electronic device, or from the time that it is stored in the memory 112, after which it should be deleted if it is unused, i.e. if it has not been displayed on the electronic device.

Additionally or alternatively, the removal of messages from memory may be based on event flags associated with the messages. Each message may have one or more associated event flags or, alternatively, no event flags associated. The event flag represents an event that can occur and that is identifiable by the electronic device, for example, arriving at a particular location, or a defined time being reached. When an event associated with a message's event flag occurs, the message may be deleted. Alternatively, the message may be deleted when the event associated with the message's event flag does not-occur. It will be appreciated that messages with event flag of both types may both be present in the memory of a device. Furthermore, a single message may be associated with flags for both type, e.g. removing a message when a first event identified by at least one of its associated event flags has occurred, and when a second event identified by at least one of its associated event flags has not occurred. The event flags may relate to one or more of: a start time of the event, an end time of the event, a duration of the event, a location of the event. The electronic device 101 may identify whether the event has occurred by comparing the operating status of the electronic device with the event flag, wherein the operating status comprises data indicative of one or more of: a current time and a location of the electronic device. Furthermore, event flags may, when satisfied, result in the electronic device 101 requesting further messages related the message for which the event flag was satisfied from the server, rather than removing the message.

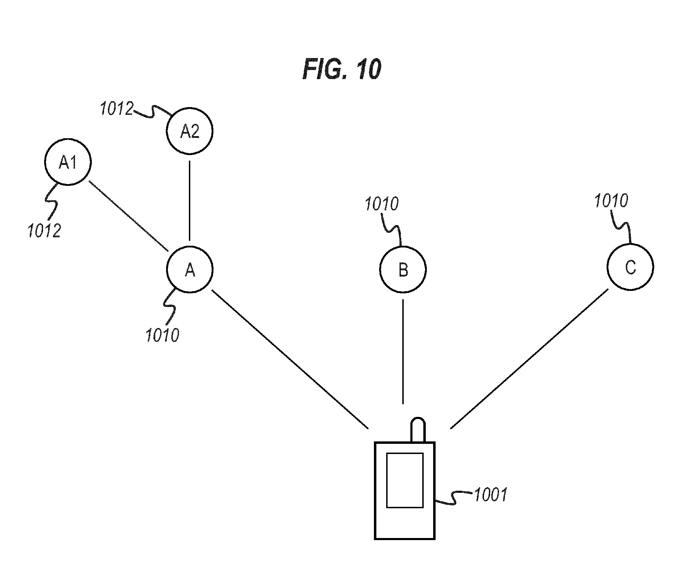

An example of the removal of messages based on event flags is depicted in Fig. 10. Fig. 10 shows an electronic device 1001 with three messages 1010, A, B and C stored in memory. Each message A, B, and C relates to a particular location such as a shop, bar, or restaurant. When the user of the electronic device enters a location specified by an event flag of message A, the electronic device request further messages 1012 from the server which also relate to location A. Furthermore, messages B and C also have associated event flags for location A, which, when the associated event occurs, removes messages B and C from the memory of the electronic device 101.

Method 800 may follow directly from the first embodiment of the method 400 described above, i.e. when the method 400 is carried out on a remote server. In particular, the messages transmitted to the electronic device 101 in the final step of method 400 are received by the electronic device 101 the message and the electronic device 101 provides notification of the message. The electronic device may provide notification of the method immediately subsequent to receiving the message, i.e. without introducing an artificial delay. Alternatively, the message may only be notified at a delayed time after receiving the message, i.e. following an artificial delay. In accordance with the method 800, the electronic device 101 may store the message in an associated memory 112, to be retrieved at a later time, when notification is to take place. Notification of the message may occur following receipt of a trigger signal by the electronic device 101. The trigger signal may be generated by the electronic device itself, or by a remote device such a server. The trigger signal may indicate that one or more trigger criteria are met by an operating status of the electronic device. It will be appreciated that any of the features described herein with respect to method 800 can be part of the method carried out by the electronic device 101 subsequent to method 400.

The electronic device 101, or server 142, 144 can comprise comprises a memory and the processing circuitry 110. The processing circuitry 110 in conjunction with computer executable code stored in memory is thereby configured to perform steps of the methods of this disclosure as herein disclosed.

While only specific embodiments of the present disclosure have been shown and described, it will be appreciated that changes and modifications may be made thereunto without departing from the scope of the disclosure as defined by the claims. All patent applications and patents, and all other publications referenced herein are incorporated herein in their entireties.

While the disclosure has been disclosed in connection with the preferred embodiments shown and described in detail, various modifications and improvements thereon will become readily apparent to those skilled in the art. Accordingly, the scope of the present disclosure is not to be limited by the foregoing examples, but is to be understood in the broadest sense based on the claims.

The use of the terms "a" and "an" and "the" and similar referents in the context of describing the disclosure (especially in the context of the following claims) is to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein may be performed in any suitable order unless otherwise indicated herein or otherwise clearly contradicted by context. The use of any and all examples, or exemplary language (e.g., "such as") provided herein, is intended merely to better illuminate the disclosure and does not pose a limitation on the scope of the disclosure unless otherwise claimed. No language in the specification should be construed as indicating any non-claimed element as essential to the practice of the disclosure.

While the foregoing written description enables one of ordinary skill to make and use what is considered presently to be the best mode thereof, those of ordinary skill will understand and appreciate the existence of variations, combinations, and equivalents of the specific embodiment, method, and examples herein. The disclosure should therefore not be limited by the above described embodiment, method, and examples, but by all embodiments and methods within the scope of the claims.

All documents referenced herein are hereby incorporated by reference.

### Embodiments

The following is a non-exhaustive list of embodiments of the present disclosure which may be claimed.
1. A method on a server for controlling messages transmitted to an electronic device, the method comprising steps of:
   retrieving message preference data from a first database;
   determining by the server if a message is authorised for transmission to the electronic device according to the message preference data; and
   if the message is determined to be authorised, transmitting the message from the server to the electronic device.
2. The method of embodiment 1, wherein the message is transmitted for notification on the electronic device.
3. The method of embodiment 1 or embodiment 2, further comprising, prior to the step of retrieving message preference data, the steps of:
   determining that a wireless beacon is in communication with the electronic device; and
   storing beacon information of the wireless beacon in a second database.
4. The method of embodiment 1 or embodiment 2, further comprising, prior to the step of retrieving message preference data, the steps of:
   determining that the electronic device has entered a defined geographic location or area; and
   storing information related to the geographic location or area in a second database.
5. The method of embodiment 1 or embodiment 2, further comprising, prior to the step of retrieving message preference data, the steps of :
   determining that one or more of a push message, a SMS message, an in-app pop-up message, or a website pop-up message should be transmitted to the electronic device; and
   storing information related to the one or more of a push message, a SMS message, an in-app pop-up message, or a website pop-up message in a second database.
6. The method of any one of embodiments 3 to 5, wherein the first database and second database are a single combined database.
7. The method of any one of embodiments 3 to 5, wherein the first database and second database are different databases.
8. The method of any one of embodiments 3 to 7, further comprising, after the step of storing beacon information and prior to the step of retrieving message preference data, the steps of:
   modifying the message preference data in the first database based on the beacon information in the second database.
9. The method of any one of embodiments 1 to 8, wherein the message preference data comprise a maximum frequency by which messages can be transmitted to the electronic device.
10. A method on an electronic device for controlling the notification of messages on the electronic device, the method comprising steps of:
   retrieving message preference data from a first database;
   determining by the electronic device if a message is authorised for notification on the electronic device according to the message preference data; and
   if the message is determined to be authorised, providing notification of the message on the electronic device.
11. The method of embodiment 10, further comprising, prior to the step of retrieving message preference data, the steps:
   determining that a wireless beacon is in communication with the electronic device; and
   storing beacon information of the wireless beacon in a second database.
12. The method of embodiment 10, further comprising, prior to the step of retrieving message preference data, the steps of:
   determining that the electronic device has entered a defined geographic location or area; and
   storing information related to the geographic location or area in a second database.
13. The method of embodiment 10, further comprising, prior to the step of retrieving message preference data, the steps of:
   determining that one or more of a push message, a SMS message, an in-app pop-up message, or a website pop-up message should be notified on the electronic device; and
   storing information related to the one or more of a push message, a SMS message, an in-app pop-up message, or a website pop-up message in a second database.
14. The method of embodiment 10 or 13, wherein the notification comprises the message.
15. The method of any one of embodiments 11 to 14, wherein the first database and second database are a single combined database.
16. The method of any one of embodiments 11 to 14, wherein the first database and second database are different databases.
17. The method of embodiment 11, further comprising, after the step of storing beacon information and prior to the step of retrieving message preference data, the step of:
   modifying the message preference data in the first database based on the beacon information in the second database.
18. The method of any one of embodiments 3 to 9, or any one of embodiments 11 to 17, wherein the beacon information for each wireless beacon comprises one or more of:
   identification information of the beacon; a time at which the wireless beacon was detected by the electronic device; a geographical location or area at which the wireless beacon was detected; a time at which a last message was transmitted to the electronic device in response to detection of the wireless beacon; and a content type associated with the wireless beacon.
19. The method of any one of embodiments 3 to 9, or any one of embodiments 11 to 18, wherein the step of determining if a message is authorised comprises determining if a particular wireless beacon has been previously detected within a predetermined period of time.
20. The method of any one of embodiments 10 to 19, wherein the step of determining if a message is authorised comprises comparing the message preference data to characteristics of the message.
21. The method of any one of embodiments 10 to 20, wherein the message preference data comprise a maximum frequency with which messages can be notified on the electronic device.
22. The method of any one of embodiments 10 to 21, wherein the message preference data comprise a time of day, month, or year at which messages can be notified on the electronic device.
23. The method of any one of embodiments 1 to 22, wherein the message preference data comprise one or more of: the amount of money a user spends on goods or services within a given time period, such as per week, month, or year; the amount of money the user spends on particularly categories of goods or services within a given time period, such as per week, month, or year; the locations at which the user purchases or commonly purchases goods or services; whether a user has purchased goods or services in a particular category within a given time period, such as the previous day, week, month, or year; a prediction as to whether the user is interested in a particular category of goods or services.
24. The method of any one of embodiments 1 to 23, further comprising the step of:
   updating the message preference data according to feedback received from the electronic device.
25. The method of embodiment 24, wherein the feedback received from the electronic device is caused by one or more of opening the message, following a link embedded in the message, ignoring the initial message alert, dismissing an initial message alert, snoozing an initial message alert for later review, saving an initial message alert for later review, opening an initial message alert, dismissing the message, snoozing the message for later review, saving the message for later review, reading the message, clicking a link within the message, activating a button within the message, ignoring the message, and taking any other action related to the message.
26. The method of any one of embodiments 3 to 9, or any one of embodiments 11 to 25, wherein the beacon is configured to communicate with the electronic device via a short-range wireless communications protocol.
27. The method of embodiment 26, wherein the wireless beacon comprises a Bluetooth or Bluetooth Low Energy, or Bluetooth Smart beacon.
28. The method of any one of embodiments 1 to 27, wherein the electronic device is configured to communicate with the server via a long-range wireless protocol, such as one or more of: LTE, UMTS, 3G, EDGE, GPRS, GSM, and Wi-Fi.
29. The method of any one of embodiments 1 to 28, wherein the message preference data comprise one or more of message feedback data generated in response to notification of the message by the electronic device.
30. The method of embodiment 29, wherein the message feedback data comprise a behavioural flag, such as one or more of a like flag, a dislike flag, a type flag, and a 'not now' flag.
31. The method of embodiment 29, wherein the message feedback data comprise a deferral flag, wherein the deferral flag indicating that the message should be notified on the electronic device at a later time.
32. The method of embodiment 31, further comprising updating the message preference data to indicate that similar messages should not be notified in the originally-attempted timeslot.
33. The method of embodiment 31 or embodiment 32, further comprising providing notification of the message on the electronic device at a later time.
34. The method of embodiment 29 or embodiment 30, wherein the message feedback data comprise data of one or more actions taken in response to a message, said actions comprising one or more of: opening the message, following a link embedded in the message, ignoring the initial message alert, dismissing an initial message alert, snoozing an initial message alert for later review, saving an initial message alert for later review, opening an initial message alert, dismissing the message, snoozing the message for later review, saving the message for later review, reading the message, clicking a link within the message, activating a button within the message, ignoring the message, and taking any other action related to the message.
35. The method of embodiment 2, further comprising the steps of:
   receiving the message at the electronic device; and
   providing notification of the message on the electronic device.
36. The method of embodiment 35, wherein the step of providing notification of the message occurs immediately subsequent to the step of receiving the message.
37. The method of embodiment 35, wherein the step of providing notification of the message occurs at a delayed time after the step of receiving.
38. The method of embodiment 37, further comprising, between the steps of receiving and providing, the steps of:
   storing the message in a memory associated with the first electronic device; and
   retrieving the message from the memory associated with the first electronic device.
39. The method of embodiment 38, further comprising, between the steps of storing and retrieving, the step of:
   receiving a trigger signal, wherein the trigger signal indicates that one or more trigger criteria are met by an operating status of the electronic device;
      wherein the steps of retrieving and providing notification are only carried out in response to receipt of the trigger signal.
40. The method of any one of embodiments 1 to 34, wherein the message preference data comprises a threshold message value and a message slot for a given message comprises a message slot demand value.
41. The method of embodiment 40, wherein the step of determining comprises determining whether the threshold value has been reached or passed by the message slot demand value of the message slot.
42. The method of embodiment 40 or 41, wherein the message slot demand value is set according to demand for transmission of a given message within the message slot.
43. The method of embodiment 42, wherein the message slot demand value of the message slot is set by the frequency of received requests by third party devices for utilising the message slot.
44. The method of any one of embodiments 40 to 43 when dependent on embodiment 1, further comprising, prior to the step of determining, the steps of:
   receiving an operating status of the electronic device; and
   setting the number of message slots according to the operating status of the electronic device.
45. The method of embodiment 44, wherein the operating status comprises data indicative of a communications network to which the electronic device is connected.
46. The method of embodiment 45, wherein the number of messages slots is reduced when the device is connected to a public network.
47. The method of embodiment 44 or 45, wherein the number of message slots increased when the device is connected to a private network.
48. The method of embodiment 44, wherein the operating status comprises data indicative of a location of the electronic device as provided by a positioning module of the electronic device.
49. The method of embodiment 48, wherein the step of setting comprises determining whether the location of the electronic device falls within a designated area.
50. The method of embodiment 48, further comprising the step of receiving location data from at least one further electronic device.
51. The method of embodiment 50, wherein the step of setting comprises determining the number of electronic devices within a designated area.
52. The method of embodiment 51, wherein the number of message slots for the electronic device is reduced when the number of electronic devices within the designated area increases.
53. The method of embodiment 51 or embodiment 52, wherein the number of message slots for the electronic device is increased when the number of electronic devices within the designated area decreases.
54. The method of any one of embodiments 40 to 43 when dependent on embodiment 1, further comprising, prior to the step of determining, the steps of:
   receiving an operating status of the electronic device; and
   setting the message slot demand value of at least one message slot according to the operating status of the electronic device.
55. The method of embodiment 54, wherein the operating status comprises data indicative of a communications network to which the electronic device is connected.
56. The method of embodiment 55, wherein the message slot demand value is increased when the electronic device connects to a public network.
57. The method of embodiment 55 or 56, wherein the message slot demand value is decreased when the device connects to a private network.
58. The method of embodiment 54, wherein the operating status comprises data indicative of a location of the electronic device as provided by a positioning module of the electronic device.
59. The method of embodiment 58, wherein the step of setting comprises determining whether the location of the electronic device falls within a designated area.
60. The method of embodiment 59, further comprising the step of receiving location data from at least one further electronic device.
61. The method of embodiment 60, wherein the step of setting comprises determining the number of further electronic devices within a designated area.
62. The method of embodiment 61, wherein the message slot demand value is increased when the number of further electronic devices within the designated area increases.
63. The method of embodiment 61 or embodiment 62, wherein the message slot demand value decreases when the number of further electronic devices within the designated area decreases.
64. The method of any one of embodiments 51 to 53 or embodiments 61 to 63, wherein the designated area is defined by a fixed radius around the electronic device.
65. The method of any one of embodiments 51 to 53 or embodiments 61 to 63, wherein the designated area is defined by a geo-fence.
66. An electronic device comprising processing circuitry for controlling messages transmitted to a secondary electronic device, wherein the processing circuitry is configured to:
   retrieve message preference data from a first database;
   determine if a message is authorised for transmission to the secondary electronic device according to the message preference data; and
   if the message is determined to be authorised, transmitting the message from the electronic device.
67. The electronic device of embodiment 66, wherein the electronic device is a server which is configured for communication with the secondary electronic device and the first database.
68. An electronic device comprising processing circuitry, wherein the processing circuitry is configured to:
   retrieve message preference data from a first database;
   determine if a message is authorised for notification on the electronic device according to the message preference data; and
   if the message is determined to be authorised, providing notification of the message on the electronic device.
69. The electronic device of any one of embodiments 66 to 68, wherein the processing circuitry is configured to perform the steps of any one of the methods of embodiments 3 to 9 or 11 to 65.
70. A computer-implemented method for controlling messages transmitted to an electronic device, the method comprising the steps of:
   receiving context data from at least one context data provider device;
   receiving preference data associated with the electronic device;
   determining if the context data and preference data meet one or more trigger criteria; and
   if the context data and preference data are determined to meet at least one of the one or more trigger criteria:
   retrieving one or more messages associated with the met trigger criteria; and
   transmitting the one or more messages to the electronic device.
71. The method of embodiment 70, wherein the context data comprises current situation data, such as one or more of: weather data, news data, sports data, transportation data, and traffic data.
72. A computer-implemented method for controlling messages transmitted to an electronic device, the method comprising the steps of:
   receiving operating status data from the electronic device;
   receiving preference data associated with the electronic device;
   determining if the operating status data and preference meet one or more trigger criteria; and
   if the operating status data and preference data are determined to meet at least one of the one or more trigger criteria:
   retrieving at least one message associated with the at least one met trigger criteria; and
   transmitting the at least one message to the electronic device.
73. A computer-implemented method for controlling messages transmitted to an electronic device, the method comprising the steps of:
   receiving context data from at least one context data provider device;
   receiving operating status data from the electronic device;
   determining if the context data and operating status data meet one or more trigger criteria; and
   if the context data and operating status data are determined to meet at least one of the one or more trigger criteria:
   retrieving at least one message associated with the at least one met trigger criterion; and
   transmitting the at least one message to the electronic device.
74. The method of embodiment 73, further comprising the step of receiving preference data associated with the electronic device, wherein the step of determining further comprises determining if the preference data meet the trigger criteria, and wherein each of the steps of retrieving and transmitting are only performed if the preference data also meet the trigger criteria.
75. The method of any one of embodiments 72 to 74, wherein the operating status comprises data indicative of a location of the electronic device provided by a positioning module of the electronic device.
76. The method of embodiment 75, wherein the step of determining comprises analysing the received location of the electronic device to determine whether the electronic device is moving along a vehicle pathway, such as a road or railway track.
77. The method of embodiment 76, wherein at least one of the trigger criteria requires that the electronic device is not moving along a vehicle pathway, such as a road or railway track.
78. The method of embodiment 72 or 73, wherein the operating status comprises data indicative of the acceleration of the electronic device provided by an accelerometer and/or gyroscope of the electronic device.
79. The method of embodiment 78, wherein the step of determining comprises analysing the acceleration data of the electronic device to predict or determine whether the user of the device is engaged in physical activity.
80. The method of embodiment 79, wherein at least one of the trigger criteria requires that the acceleration data does not indicate one or more defined physical activities.
81. The method of embodiment 75, further comprising the step of receiving location data from at least one further electronic device.
82. The method of embodiment 81, wherein the step of determining comprises determining the number of further electronic devices within a designated area.
83. The method of embodiment 82, wherein the designated area is defined by a fixed radius around the electronic device.
84. The method of embodiment 82, wherein the designated area is defined by a geo-fence.
85. The method of any one of embodiments 81 to 84, wherein the preference data indicates that the electronic device and at least one of the further electronic devices are associated with each other such that the at least one message is transmitted to the electronic device and not to the at least one further electronic device.
86. The method of embodiment 72 or 73, wherein the operating status comprises data indicative of software installed on the electronic device.
87. The method of embodiment 72 or 73, wherein the operating status comprises data indicative of software running on the electronic device.
88. The method of any of embodiments 72 to 87, wherein the operating status comprises data indicative of a date and/or time held by a clock of the electronic device.
89. The method of embodiment 88, wherein the one or more trigger criteria comprise a time or a time period, and/or a date or date period.
90. The method of embodiment 88 or 89, when dependent on embodiment 72 or 74, wherein the preference data comprise a time or a time period, and/or a date or date period.
91. The method of embodiment 89 or 90, wherein the time period is defined as one of: morning, afternoon, evening, breakfast, lunch, or dinner.
92. The method of any of embodiments 89 to 91, wherein the time, time period, date or date period is a specific time or date at which messages are to be notified.
93. The method of embodiment 70, 72 or 73, further comprising a step of determining a predicted future location of the electronic device.
94. The method of embodiment 93, wherein the predicted future location is determined based on a location and movement of the electronic device along a known transport route.
95. The method of embodiment 93 or 94, wherein the predicted future location is determined based on locations previously received for the electronic device.
96. A processing device comprising processing circuitry, wherein the processing circuitry is configured to perform the steps of any one of embodiments 70 to 95.
97. A system comprising a server and the electronic device, wherein the server comprises the processing device of embodiment 96, and wherein the server and the electronic device are configured to communicate via a communications network.
98. The system of embodiment 97, further comprising at least one further electronic device, wherein the at least one further electronic device is configured to communicate with the server via a second communications network.
99. A computer-implemented method for storing and displaying messages on an electronic device, the method comprising the steps of:
   receiving one or more messages from a server, wherein the one or more messages are associated with at least one trigger criterion;
   storing the one or more received messages in a memory associated with the electronic device;
   receiving a trigger signal, wherein the trigger signal indicates that one or more trigger criteria are met by an operating status of the electronic device;
   retrieving at least one of the one or more messages stored in the memory, wherein the at least one retrieved message is associated with one or more trigger criteria that correspond with the trigger criteria indicated by the trigger signal; and
   displaying the at least one retrieved message on a display associated with the electronic device.
100. The method of embodiment 99, wherein the step of receiving is only carried out when the electronic device is connected to a designated communications network.
101. The method of embodiment 100, wherein the step of receiving is not carried out if the electronic device is connected to a communications network other than a designated communications network.
102. The method of any of embodiments 99 or 100, wherein the step of receiving is only carried out when the electronic device is at a designated location.
103. The method of any of embodiments 99 to 102, wherein the operating status of the electronic device comprises data indicative of a location of the electronic device as provided by a positioning module of the electronic device and wherein the one or more trigger criteria comprise defined geographical areas or geo-fences.
104. The method of any of embodiments 99 to 103, wherein the operating status of the electronic device comprises data indicative of a time held by a clock of the electronic device, and wherein the one or more trigger criteria comprises times or time periods.
105. The method of any of embodiments 99 to 103, wherein the messages received at the step of receiving are associated with a location of the electronic device.
106. The method of embodiment 99, further comprising the steps of:
   removing one or more of the received messages from the memory associated with the electronic device.
107. The method of embodiment 106, wherein the step of removing is preceded by the steps of:
   receiving one or more updated messages, wherein each of the one or more updated messages corresponds to one or more of the messages stored in the memory associated with the electronic device; and
   storing the one or more updated messages in the memory associated with the electronic device,
   wherein the message removed from memory at the step of removing are the messages already stored in the memory of the electronic device that correspond to the one or more updated messages.
108. The method of embodiment 106 or embodiment 107, wherein at least one of the messages stored in the memory associated with the electronic device has an associated time to live, and wherein the step of removing is performed for a message when its associated time to live expires.
109. The method of any one of embodiments 106 to 108, wherein at least one of the messages stored in the memory associated with the electronic device has at least one associated event flag for an event which can occur and which is identifiable by the electronic device.
110. The method of embodiment 109, wherein the step of removing is performed for a message when an event identified by at least one of its associated event flags has occurred.
111. The method of embodiment 109 or embodiment 110, wherein the step of removing is performed for a message when an event identified by at least one of its associated event flags has not occurred.
112. The method of embodiment 111 when dependent on embodiment 110, wherein the step of removing is performed for a message when a first event identified by at least one of its associated event flags has occurred, and when a second event identified by at least one of its associated event flags has not occurred.
113. The method of any one of embodiments 109 to 112, further comprising the step of identifying whether the event has occurred by comparing the operating status of the electronic device with the event flag.
114. The method of any one of embodiments 109 to 113, wherein the event flag comprises data indicative of one or more of: a start time of the event, an end time of the event, a duration of the event, a location of the event.
115. The method of any one of embodiments 109 to 114, wherein the operating status comprises data indicative of one or more of: a current time and a location of the electronic device.
116. An electronic device comprising processing circuitry, wherein the processing circuitry is configured to perform the steps of any one of embodiments 70 to 115.
117. A system comprising the electronic device of embodiment 116 and the server, wherein the server and the electronic device are configured to communicate via a communications network.
118. A computer-readable medium comprising computer executable instructions executable by processing circuitry, which, when executed, cause the processing circuitry to perform the steps of any one of the methods of embodiments 1 to 65, 70 to 95, or 99 to 115.

## Claims

1. A computer-implemented method for storing and notifying messages on an electronic device, the method comprising the steps of:
receiving one or more messages from a server, wherein the one or more messages are associated with at least one trigger criterion;
storing the one or more received messages in a memory associated with the electronic device;
receiving a trigger signal, wherein the trigger signal indicates that one or more trigger criteria are met by an operating status of the electronic device;
retrieving at least one of the one or more messages stored in the memory, wherein the at least one retrieved message is associated with one or more trigger criteria that correspond with the trigger criteria indicated by the trigger signal; and
notifying the at least one retrieved message on the electronic device.

2. The method of claim 1, wherein the step of receiving is only carried out when the electronic device is connected to a designated communications network.

3. The method of claim 2, wherein the step of receiving is not carried out if the electronic device is connected to a communications network other than a designated communications network.

4. The method of any of claims 1 or 2, wherein the step of receiving is only carried out when the electronic device is at a designated location.

5. The method of any of claims 1 to 4, wherein the operating status of the electronic device comprises data indicative of a location of the electronic device as provided by a positioning module of the electronic device and wherein the one or more trigger criteria comprise defined geographical areas or geo-fences.

6. The method of any of claims 1 to 5, wherein the operating status of the electronic device comprises data indicative of a time held by a clock of the electronic device, and wherein the one or more trigger criteria comprises times or time periods.

7. The method of any of claims 1 to 5, wherein the messages received at the step of receiving are associated with a location of the electronic device.

8. The method of claim 1, further comprising the steps of:
removing one or more of the received messages from the memory associated with the electronic device.

9. The method of claim 8, wherein the step of removing is preceded by the steps of:
receiving one or more updated messages, wherein each of the one or more updated messages corresponds to one or more of the messages stored in the memory associated with the electronic device; and
storing the one or more updated messages in the memory associated with the electronic device,
wherein the message removed from memory at the step of removing are the messages already stored in the memory of the electronic device that correspond to the one or more updated messages.

10. The method of claim 8 or claim 9, wherein at least one of the messages stored in the memory associated with the electronic device has an associated time to live, and wherein the step of removing is performed for a message when its associated time to live expires.

11. The method of any one of claims 8 to 10, wherein at least one of the messages stored in the memory associated with the electronic device has at least one associated event flag for an event which can occur and which is identifiable by the electronic device.

12. The method of claim 11, wherein the step of removing is performed for a message when an event identified by at least one of its associated event flags has occurred.

13. The method of claim 11 or claim 12, wherein the step of removing is performed for a message when an event identified by at least one of its associated event flags has not occurred.

14. The method of claim 13 when dependent on claim 12, wherein the step of removing is performed for a message when a first event identified by at least one of its associated event flags has occurred, and when a second event identified by at least one of its associated event flags has not occurred.

15. The method of any one of claims 11 to 14, further comprising the step of identifying whether the event has occurred by comparing the operating status of the electronic device with the event flag.

16. The method of any one of claims 11 to 15, wherein the event flag comprises data indicative of one or more of: a start time of the event, an end time of the event, a duration of the event, a location of the event.

17. The method of any one of claims 11 to 16, wherein the operating status comprises data indicative of one or more of: a current time and a location of the electronic device.

18. An electronic device comprising processing circuitry, wherein the processing circuitry is configured to perform the steps of any one of claims 1 to 17.

19. A system comprising the electronic device of claim 18 and the server, wherein the server and the electronic device are configured to communicate via a communications network.

20. A computer-readable medium comprising computer executable instructions executable by processing circuitry, which, when executed, cause the processing circuitry to perform the steps of any one of the methods of claims 1 to 17.
